# EUROPÄISCHE PATENTSCHRIFT

(11) **EP 2 057 387 B1**
(45) Veröffentlichungstag und Bekanntmachung des Hinweises auf die Patenterteilung: **21.08.2013**
(21) Anmeldenummer: 07801283.8
(22) Anmeldetag: 27.08.2007
(51) Int. Cl.: F16F 9/02, F16F 9/32, F16F 9/346, F16F 9/36

(54) **KOSTENGÜNSTIG HERSTELLBARE PNEUMATISCHE VERZÖGERUNGSVORRICHTUNG**
PNEUMATIC DECELERATION APPARATUS WHICH CAN BE PRODUCED COST-EFFECTIVELY
DISPOSITIF PNEUMATIQUE DE DECELERATION DE FABRICATION ECONOMIQUE

(30) Priorität: 28.08.2006 DE 102006040085
(43) Veröffentlichungstag der Anmeldung: 13.05.2009
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2007/001521
(87) Internationale Veröffentlichungsnummer: WO 2008/025337

(56) Entgegenhaltungen:
- EP-A- 1 211 375
- EP-A- 1 260 159
- WO-A-03/100287
- WO-A-2004/067988
- WO-A-2006/063657
- DE-B3- 10 313 659

## Beschreibung

Die Erfindung betrifft eine pneumatische Verzögerungsvorrichtung mit einem Zylinder und mit einem in diesem mittels einer Kolbenstange geführten, mit einem Kolbendichtelement ausgestatteten, einen Verdrängungsraum gegen einen Ausgleichsraum abgrenzenden Kolben, die eine der Hubbewegung des Kolbens entgegengesetzte Kraft aufbaut, wobei der Leckagestrom zwischen dem Verdrängungsraum und dem Ausgleichsraum zumindest hubrichtungsabhängig ist, wobei zumindest der Kolben und die Kolbenstange eine einteilige Kolbeneinheit bilden, wobei das Kolbendichtelement mindestens zwei Verformungszonen aufweist, zwischen denen ein Stützring angeordnet ist, von denen eine erste Zone eine flink verformende Zone und eine zweite eine träge verformende Zone ist, wobei sich unter dem Einfluss der gleichen Druckänderung die zweite Zone träger als die erstgenannte Zone verformt, wobei die sich flink verformende Zone des Kolbendichtelements die Zylinderinnenwandung zumindest bei Lage des Kolbens in der dem Verdrängungsraum abgewandten Endlage im drucklosen Zustand kontaktiert und wobei sich bei Druckbeaufschlagung die träge verformende Zone unter axialer Kontraktion in radialer Richtung nach außen zumindest beim Verfahren des Kolbens aus der dem Verdrängungsraum abgewandten Endlage zur Anlage an die Zylinderinnenwandung verformt.

Aus der DE 102 14 596 A1 ist eine derartige Verzögerungsvorrichtung bekannt. Sie besteht aus vielen Einzelteilen, die einzeln herzustellen sind und die anschließend zusammengebaut werden.

Aus der WO 03/100287 A1 und der WO 2004/067988 A1 sind pneumatische Dämpfungsvorrichtungen bekannt. Das in Richtung des Kompressionsraums geschlossene Kolbendichtelement wird beim Druckaufbau gestaucht und legt sich an die Zylihderinnenwandung an. Nach der WO 2004/067988 kann die Reibkraftverteilung am Kolbendichtelement mittels eines Querausnehmung beeinflusst werden.

Aus der WO 2006/063657 A2 ist ein Anschlagdämpfer bekannt. Der Kolben trägt einen Balgabschnitt, der in eine Dichtlippe ausläuft.

Der vorliegenden Erfindung liegt daher die Problemstellung zugrunde, eine Verzögerungsvorrichtung sowie ein Führungssystem mit einer Verzögerungsvorrichtung zu entwickeln, wobei die Verzögerungsvorrichtung kostengünstig herstellbar sein soll und eine hohe Verzögerung ermöglichen soll.

Diese Problemstellung wird mit den Merkmalen des Hauptanspruches gelöst. Dazu begrenzen das Kolbendichtelement und der Kolben einen mit dem Verdrängungsraum kommunizierenden Druckraum. Die Wandstärke der zweiten Zone steigt in Längsrichtung des Kolbendichtelements an, wobei der Bereich geringerer Wandstärke in Richtung der ersten Zone orientiert ist.

Der Kolben, das Kolbendichtelement und die Kolbenstange können eine einteilige Kolbeneinheit bilden. Das Kolbendichtelement weist dann mindestens zwei Verformungszonen aufweist, von denen sich unter dem Einfluss der gleichen Druckänderung eine erste Zone flink und eine zweite Zone träger als die erstgenannte Zone verformt.

Bei einem Führungssystem mit einer derartigen Verzögerungsvorrichtung bildet zumindest der Kolben und die Kolbenstange eine einteilige Kolbeneinheit. Auch in diesem Fall weist das Kolbendichtelement mindestens zwei Verformungszonen auf, die sich bei einer Druckänderung unterschiedlich träge verformen.

Weitere Einzelheiten der Erfindung ergeben sich aus den Unteransprüchen und der nachfolgenden Beschreibung schematisch dargestellter Ausführungsformen.
- Figur 1:: Verzögerungsvorrichtung;
- Figur 2:: Kolbeneinheit mit Kolbenstange und Kolben;
- Figur 3:: Kolbendichtelement;
- Figur 4:: Kolbeneinheit mit zylindrischem Führungsabschnitt;
- Figur 5:: Dimetrische Ansicht des Kolbendichtelements zu Figur 4;
- Figur 6:: Längsschnitt des Kolbendichtelements aus Figur 5;
- Figur 7:: Verzögerungsvorrichtung mit einer Kolbeneinheit, die einen Kolben, eine Kolbenstange und ein Kolbendichtelement umfasst.

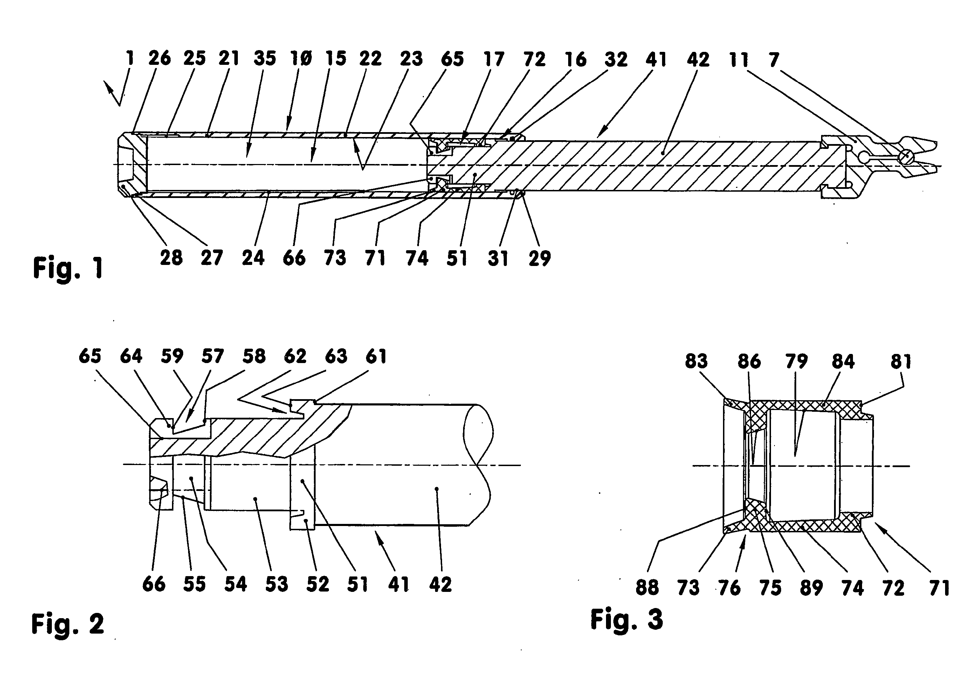

Die Figur 1 zeigt eine Verzögerungsvorrichtung (10), die z.B. in einem hier nicht weiter dargestellten Führungssystem eingesetzt ist. Dieses Führungssystem führt und trägt beispielsweise eine Schublade eines Möbelstücks. Es umfasst außer der Verzögerungsvorrichtung (10) z.B. eine Einzugsvorrichtung. Beispielsweise beim Einschieben der Schublade umgreift vor dem Erreichen der Endlage die an der Schublade angeordnete Verzögerungsvorrichtung (10) einen im Möbelstück fest angeordneten Mitnehmer (7). Die Hubbewegung der Schublade relativ zum Möbelstück wird verzögert. Gleichzeitig oder nach Zurücklegen eines weiteren Teilhubes in Richtung der Endlage wird mittels der Schublade die Einzugsvorrichtung ausgelöst. Die Einzugsvorrichtung zieht entgegen der Wirkung der Verzögerungsvorrichtung die Schublade in die z.B. geschlossene Endlage. Die Verzögerungsvorrichtung (10) bleibt hierbei z..B. bis zum Erreichen der Endlage im Eingriff mit dem Mitnehmer (7).

Die Verzögerungsvorrichtung (10) umfasst einen Zylinder (21), in dem eine Kolbeneinheit (41), bestehend aus einem Kolben (42) und einer Kolbenstange (51), geführt ist. Der Kolben (51) trägt ein Kolbendichtelement (71). Das nach außen gerichtete Ende der z.B. zylindrischen Kolbenstange (42) trägt in diesem Ausführungsbeispiel ein Mitnahmeelement (11), das den Mitnehmer (7) lösbar umgreift.

Der Zylinder (21) umfasst einen Zylindermantel (22) mit einem Kopfteil (29) und ein in den Zylindermantel (22) eingesetzten Zylinderboden (28). Der Zylindermantel (22) und der Zylinderboden (28) sind beispielsweise als Spritzgussteile aus thermoplastischem Kunststoff, z.B. Polyoximethylen, hergestellt. Der Zylindermantel (22) ist hier auf seiner Außenseite zylindrisch. Seine Länge beträgt beispielsweise das Fünfeinhalbfache des Durchmessers. Die nichtzylindrische Zylinderinnenwandung (23) ist z.B. in Form eines Kegelstumpfmantels ausgebildet. Die kleinere Querschnittsfläche.dieses Kegelstumpfmantels befindet sich am Kopfteil (29) des Zylinders (21), die größere Querschnittsfläche am Zylinderboden (28). Die letztgenannte Querschnittsfläche beträgt z.B. 80 mm². Die Steigung dieses Kegels beträgt beispielsweise 1:140. Die Innenwandung (23) ist gegebenenfalls poliert. Die minimale Wandstärke des Zylindermantels (22) beträgt z.B. 6% seines Außendurchmessers.

In der Zylinderinnenwandung (23) ist hier eine Längsnut (24) angeordnet. Ihre Länge beträgt beispielsweise 70% der Zylinderlänge und endet am Zylinderboden (28). Ihre Breite beträgt z.B. 2% des größeren Durchmessers der Zylinderinnenwandung (23). Die Tiefe der Nut (24) beträgt in diesem Ausführungsbeispiel ein Viertel ihrer Breite. Die Nut (24) ist zur Innenwandung (23) hin scharfkantig, der Nutauslauf hat beispielsweise eine Steigung von 45 Grad. Statt einer einzelnen Nut (24) können auch mehrere Nuten (24) an der Innenwandung (23) angeordnet sein. Auch können sich diese z.B. schraubenlinienförmig an der Innenwandung (23) des Zylindermantels (22) entlangwinden.

Am Bodenende (26) des Zylindermantels (22) befindet sich in diesem Ausführungsbeispiel eine weitere Längsnut (25) in der Zylinderinnenwandung (23). Diese Längsnut (25), sie ist z.B. um 180 Grad versetzt zur Nut (24), ist beispielsweise doppelt so breit wie die Nut (24), ihre Länge beträgt z.B. 15% der Zylinderlänge. Die Tiefe dieser Nut (25) beträgt hier ein Achtel ihrer Breite. Auch diese Nut (25) ist zur Zylinderinnenwandung (23) hin scharfkantig und hat z.B. eine Auslaufschräge von 45 Grad.

Jede dieser Nuten (24, 25) vergrößert den Querschnitt des Zylinderinnenraumes (35).

Zum Einsetzen des Zylinderbodens (28) verfügt das Bodenende (26) z.B. über eine zweistufige rotationssymmetrische Einkerbung (27). Bei der Montage des Zylinderbodens (28) wird die Luft aus dem Bereich der äußeren Einkerbung nach außen verdrängt, während die Luft aus der inneren Einkerbung in den Zylinderinnenraum (35) verdrängt wird. Es ist auch denkbar, im Zylinderboden (28) eine zentrale Bohrung anzuordnen, die nach dem Einsetzen des Zylinderbodens (28) mittels eines Verschlussstopfens verschlossen wird.

Im Kopfteil (29) sind in diesem Ausführungsbeispiel die Kolbenstangendurchführung (31) und die Kolbenstangendichtung (32) angeordnet. Die Kolbenstangendichtung (32) kann an den Kopfteil (29) angeformt sein.

Der Kolben (51) und die Kolbenstange (42) der Kolbeneinheit (41) sind aneinander angeformt. Die Kolbeneinheit (41) ist als Einzelteil in der Figur 2 dargestellt. Ihre Gesamtlänge entspricht in diesem Ausführungsbeispiel der Länge des Zylinders (21). Der maximale Durchmesser der Kolbeneinheit (41) beträgt z.B. 98 % des kleineren Innendurchmessers des Zylinders (21).

Der Kolben (51) hat mehrere gestufte Durchmesserbereiche (52 - 54). Ein erster, an die Kolbenstange (41) angrenzender Durchmesserbereich (52) hat eine Anlageschulter (61), um den Hub der Kolbeneinheit (41) im Zylinder (21) zu begrenzen. Dieser Bereich (52) hat den maximalen Durchmesser des Kolbens (51). An diesen ersten Durchmesserbereich (52) schließt sich ein zylindrischer Druckraumbereich (53) an, dessen Durchmesser z.B. 70 % des kleineren Innendurchmessers des Zylinders (21) beträgt. Die Länge dieses Druckraumbereichs (53) beträgt in diesem Ausführungsbeispiel 150 % des kleineren Zylinderinnendurchmessers. Die Stirnfläche (63), die die beiden Durchmesserbereiche (52, 53) miteinander verbindet, hat eine umlaufende Aufnahmeringnut (62). Die Innenkante der Aufnahmeringnut (62) ist beispielsweise bündig mit dem Druckraumbereich (53).

An diesen Bereich (53) des Kolbens (51) schließt sich - in der von der Kolbenstange (42) abgewandten Richtung - eine Kolbennut (57) an. Der Kolben (51) umfasst in diesem Ausführungsbeispiel im Bereich der Kolbennut (57) einen kegelstumpfförmigen Bereich (54), der in der Richtung der Kolbenstange (42) ansteigt. Die Erzeugenden der Kegelstumpfmantelfläche (55) schließen mit der gedachten Mittellinie der Kolbeneinheit (41) einen Winkel von 15 Grad ein. Die Kolbennut (57) wird in axialer Richtung von zwei Begrenzungsflächen (58, 59) begrenzt.

In der der Kolbenstange (42) abgewandten Richtung wird der Kolben (51) begrenzt mittels eines Anlageflansches (64), dessen Außendurchmesser z.B. dem Durchmesser des Druckraumbereichs (53) entspricht.

Der Kolben (51) hat z.B. zwei einander gegenüberliegende Längsnuten (65, 66). Diese durchdringen den Anlageflansch (64), den kegelstumpfförmigen Bereich (54) und einen Teil des Druckraumbereichs (53). Die Summe der minimalen Querschnitte der Längsnuten (65, 66) beträgt in diesem Ausführungsbeispiel 1 % des kleineren Innenquerschnitts des Zylinders (21).

Das Kolbendichtelement (71), vgl. Figur 3, ist beispielsweise topfförmig ausgebildet. Seine Länge beträgt z.B. 22 % des Kolbenhubs. Es umfasst hier eine zylinderförmige Manschette (72), einen der Manschette (72) abgewandten ersten Verformungsbereich (73) und einen zweiten Verformungsbereich (74). Letzter ist zwischen der Manschette (72) und dem ersten Verformungsbereich (73) angeordnet. Zwischen dem ersten (73) und dem zweiten Verformungsbereich (74) hat das Kolbendichtelement (71) einen nach innen orientierten Stützring (75). Der zweite Verformungsbereich (74) erstreckt sich somit zwischen der Manschette (72) und dem Stützring (75).

Die Länge der Manschette (72) beträgt hier 30 % der Länge des Kolbendichtelements (71). Mit dieser Manschette (72) sitzt das Kolbendichtelement (71) in der Aufnahmeringnut (62), vgl. Figur 1.

Der erste Verformungsbereich (73) umfasst einen auskragenden Dichtkragen (83). Der Außendurchmesser dieses Dichtkragens (83) ist vor der Montage des Kolbendichtelements (71) beispielsweise größer als der kleinste Innendurchmesser des Zylinders (21). Die Länge des Dichtkragens (83) beträgt hier 13 % der Länge des Kolbendichtelements (71), seine Stärke 6 % des kleinsten Zylinderinnendurchmessers. Der Übergang des Dichtkragens (83) zum restlichen Kolbendichtelement (71) ist beispielsweise als Filmgelenk (76) ausgebildet.

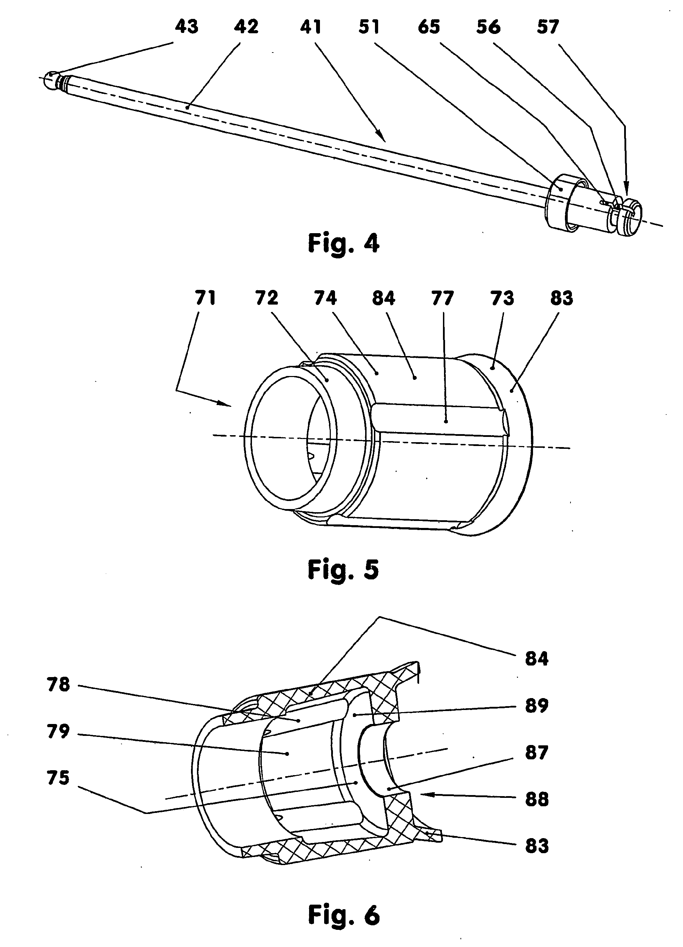

Die Länge des zweiten Verformungsbereichs (74) beträgt in diesem Ausführungsbeispiel 50 % der Länge des Kolbendichtelements (71). Der Außendurchmesser dieses Bereichs (74) beträgt beispielsweise 98 % des kleinsten Innendurchmessers des Zylinders (21). Die Wandstärke des zweiten Verformungsbereichs (74) steigt z.B. von 6,5 % des kleinsten Zylinderinnendurchmessers auf 9 % dieser Bezugsgröße an. Hierbei ist der Bereich geringerer Wandstärke in Richtung des ersten Verformungsbereiches (73) orientiert. Auf der zylindrischen Außenfläche, vgl. die Figuren 5 und 6, sind beispielsweise vier Längsnuten (77) mit einer Tiefe von etwa 3% des Außendurchmessers des Kolbendichtelements (71) angeordnet, so dass diese auf die Innenseite des Kolbendichtelements (71) als Erhebungen (78) überstehen.

Der Stützring (75) hat z.B. eine Länge von 15 % der Länge des Kolbendichtelements (71). In der Darstellung der Figuren 1 und 3 ist sein Innendurchmesser kegelstumpfförmig ausgebildet. Der zum Dichtkragen (83) orientierte kleinste Durchmesser des Stützrings (75) beträgt hier 50 % des kleinsten Innendurchmessers des Zylinders (21). Die Steigung des Kegelstumpfs (86) entspricht der Steigung des kolbenseitigen Kegelstumpfs (54), wobei sich der Innendurchmesser des Stützrings (75) in Richtung des zweiten Verformungsbereichs (74) aufweitet. Die Stirnflächen (88, 89) des Stützrings (75) sind beispielsweise Anlageflächen (88, 89) zur Anlage an die axial orientierten Begrenzungsflächen (58, 59) der umlaufenden Kolbennut (57).

Die vom Dichtkragen (83) abgewandte axiale Außenfläche des Kolbendichtelementes (71) bildet eine weitere Anlagefläche (81) des Kolbendichtelements (71) am Kolben (51).

Das Kolbendichtelement (71) ist beispielsweise aus Nitril-Butadien-Kautschuk mit halogenisierter Oberfläche hergestellt.

In der Figur 4 ist eine Kolbeneinheit (41) mit einer zylindrischen Kolbennut (57) dargestellt. Der Kolben (51) hat dementsprechend einen zylindrischen (56) anstatt eines kegelstumpfförmigen Bereichs (54). Die Längsnuten (65, 66) durchdringen als Kanäle den Anlageflansch (64), den zylindrischen Bereich (56) und den Druckraumbereich (53).

Die Figuren 5 und 6 zeigen das zu der in der Figur 4 dargestellten Kolbeneinheit (41) gehörende Kolbendichtelement (71). Im Gegensatz zu dem in den Figuren 1 und 3 dargestellten Kolbendichtelement (71) hat das hier dargestellte Kolbendichtelement (71) einen Stützring (75) mit einer zylindrischen Innenfläche.

Die in den Figuren 1 - 6 dargestellte Verzögerungsvorrichtung (10) besteht somit - ohne das Mitnahmeelement (11) und die Kolbenstangendichtung (32) - aus vier Einzelteilen. Dies sind der Zylindermantel (22), die Kolbeneinheit (41), das Kolbendichtelement (71) und der Zylinderboden (28). Diese Einzelteile (22, 41, 71, 28) können kostengünstig z.B. im Spritzgussverfahren hergestellt werden.

Bei der Montage wird das Kolbendichtelement (71) auf den Kolben (51) der Kolbeneinheit (41) in axialer Richtung aufgeschoben. Hierbei wird beispielsweise der Stützring (75) beim Überstreifen des Anlageflansches (64) aufgeweitet und verrastet mit axialem Spiel in der Kolbennut.(57). Die Manschette (72) wird dabei in die Aufnahmeringnut (62) eingeschoben. Nach dem Einsetzen hat zumindest der zweite Verformungsbereich (74) des Kolbendichtelements (71) radiales Spiel zum Kolben (51). Der Dichtkragen (83) liegt an der von der Kolbenstange (42) abgewandten Seite der Kolbeneinheit (41). Die Kolbeneinheit (41) mit dem Kolbendichtelement (71) wird z.B. vom Zylinderbodenende (26) aus in den Zylindermantel (22) eingesetzt. Danach wird der Zylindermantel (22) mittels des Zylinderbodens (28) verschlossen und gegebenenfalls das Mitnahmeelement (11) montiert. Diese Montage erfordert nur wenige Sekunden. Dadurch können innerhalb einer kurzen Zeitdauer eine große Anzahl Verzögerungsvorrichtungen (10) kostengünstig hergestellt werden.

Das Mitnahmeelement (11) kann Teil der Kolbenstange (42) sein oder an diese angeformt sein. Es ist dann Teil der Kolbeneinheit (41).

Nach der Montage begrenzen in diesem Ausführungsbeispiel der Kolben (51) und der Zylinderboden (28) einen Verdrängungsraum (15). Der Kolben (51) und der Zylinderkopf (29) begrenzen einen Ausgleichsraum (16). Das Kolbendichtelement (71) und der Kolben (51) begrenzen nun einen Druckraum (17), der über die Kanäle (65, 66) mit dem Verdrängungsraum (15) in Verbindung steht.

Ist der Kolben (51) der Verzögerungsvorrichtung (10) ausgefahren, befindet sich dieser im Bereich des kleineren Innendurchmessers des Zylinders (21). Er liegt hierbei am Zylinderkopf (29) außerhalb der Nut (24). Die Innenwandung (23) des Zylinders (21) ist in diesem Bereich z.B. glatt. Der Dichtkragen (83) berührt nichtabdichtend die Zylinderinnenwandung (23). Der zweite Verformungsbereich (74) liegt unverformt mit beidseitigem radialem Spiel zwischen der Zylinderinnenwandung (23) und dem Kolben (51).

Die montierte Verzögerungsvorrichtung (10) kann nun in das Führungssystem eingebaut werden.

Ist die Schublade geöffnet, ist die Verzögerungsvorrichtung (10) beispielsweise außer Eingriff mit dem Mitnehmer (7). Die Kolbeneinheit (41) ist ausgefahren. Auch die Einzugsvorrichtung ist außer Eingriff.

Beispielsweise beim Schließen der Schublade umgreift in einem an die geschlossenen Endlage angrenzenden Teilhub des Gesamthubes das Mitnahmeelement (11) den Mitnehmer (7). Die Kolbenstange (42) wird unter dem Einfluss der externen Kraft eingefahren. Der Kolben (51) wird hierbei vom Zylinderkopf (29) in Richtung des Zylinderbodens (28) verschoben. Hierbei wird das Volumen des Verdrängungsraumes (15) vermindert. Der Gasdruck, z.B. der Luftdruck im Verdrängungsraum (15) erhöht sich und wirkt als intere Kraft auf das Kolbendichtelement (71). Nach dem Prinzip der Selbsthilfe wird unmittelbar mit dem Beginn der Einfahrbewegung der Kolbenstange (42) der Dichtkragen (83) unter Verformung und unter Verformung des Filmgelenks (76) an die Zylinderinnenwandung (23) angepresst. Der Verdrängungsraum (15) und der Ausgleichsraum (16) werden quasi hermetisch voneinander isoliert.

Der Druck, der sich im Verdrängungsraum (15) aufbaut, baut sich auch in den Verbindungskanälen (65, 66) und im Druckraum (17) auf. Im Druckraum (17) wirkt der Gasdruck auf den zweiten Verformungsbereich (74). Letzter ist am Stützring (75) und an der Manschette (72) quasi doppelt gelagert. Bei der Druckbeaufschlagung seiner großen Innenfläche (79) durch den Überdruck im Verdrängungsraum (15) wölbt er sich in radialer Richtung nach außen. Die maximale Auslenkung ist beispielsweise im mittleren Bereich des zweiten Verformungsbereichs (74). Der zweite Verformungsbereich (74) legt sich z.B. beim Verfahren des Kolbens aus der zylinderkopfseitigen Endlage des Verdrängungsraumes (15) als Bremsmanschette'(84) an die Innenwandung (23) des Zylinders (21) an.

Beispielsweise aufgrund der doppelten Lagerung und der großen Innenfläche (79) wird der zweite Verformungsbereich (74) nur langsam verformt. Auf die Druckänderung im Verdrängungsraum (15) reagiert dieser zweite Verformungsbereich (74) somit träger als der erste Verformungsbereich (73). Der erste Verformungsbereich (73) ist eine sich bei einer Druckänderung flink verformende Zone (73), während der zweite Verformungsbereich (74) eine sich träger verformende Zone (74) ist.

Bei der Verformung der Bremsmanschette (84) wird das Kolbendichtelement (71) in axialer Richtung verkürzt. Der Stützring (75) wandert entlang der kegelstumpfförmigen Fläche (55) in Richtung der Kolbenstange (42) und drückt dabei den zweiten Verformungsbereich (74) zusätzlich radial nach außen, wobei die Bremswirkung der Bremsmanschette (84) verstärkt wird. Die Verbindungskanäle (65, 66) werden nicht unterbrochen, so dass der Verdrängungsraum (15) und der Druckraum (17) während des gesamten Hubes miteinander kommunizieren.

Beim weiteren Einfahren der Kolbenstange (42) bewirken der an der Zylinderinnenwandung (23) angepresste Dichtkragen (83) und die an der Zylinderinnenwandung (23) anliegende Bremsmanschette (84) eine hohe Verzögerung der Kolbenhubbewegung. Die Schublade wird stark abgebremst.

Mit zunehmendem Hub der Kolbenstange (42) und dem sich z.B. stetig vergrößernden Zylinderquerschnitt verringert sich die Anlagefläche des Dichtkragens (83) und der Bremsmanschette (84) an der Zylinderinnenwandung (23). Die durch den Gasdruck im Verdrängungsraum (15) verursachte Normalkraft auf die Zylinderinnenwandung (23) nimmt ab und damit die durch die Reibung bedingte Verzögerung der Hubbewegung. Sobald der Dichtkragen (83) des Kolbendichtelements (71) den hinteren Rand des Drosselkanals (24) passiert hat, wird Luft aus dem Verdrängungsraum (15) über den Drosselkanal (24) und die Längsnuten (77) in den Ausgleichsraum (16) verdrängt. Der Druck im Verdrängungsraum (15) fällt z.B. schlagartig ab. Die Bremsmanschette (84) kann hierbei noch an der Zylinderinnenwandung (23) anliegen.

Sobald sich das Kolbendichtelement (71) vollständig von der Innenwandung (23) gelöst hat, strömt zusätzlich Luft aus dem Verdrängungsraum (15) in den Ausgleichsraum (16). Das Kolbendichtelement (71) nimmt wieder seine Ausgangslage vor dem Beginn der Hubbewegung an. Die Schublade hat jetzt eine geringe Restgeschwindigkeit.

Während der Verzögerung der Hubbewegung kann die Schublade mit der Einzugsvorrichtung koppeln. Diese umfasst beispielsweise eine Feder, die eine zusätzliche interne Kraft auf die Führungsvorrichtung ausübt. Auf die Verzögerungsvorrichtung wirkt diese Kraft als externe Kraft. Die Schublade fährt dann langsam und mit nur noch geringer Verzögerung in ihre Endlage. Dort bleibt sie ohne Rückprall stehen.

Wird die Schublade wieder ausgezogen, strömt Luft aus dem Ausgleichsraum (16) über die Drosselkanäle (24, 25, 77) in den Verdrängungsraum (15). Das Kolbendichtelement (71) bleibt weitgehend unverformt und hat zumindest während eines großen Teils des Hubes keinen Kontakt mit der Zylinderinnenwandung (23). Während der Ausfahrbewegung strömt die Luft weitgehend ungehindert aus dem Ausgleichsraum (16) in den Verdrängungsraum (15). Die Ausfahrbewegung verläuft somit zumindest annähernd widerstandsfrei.

Sobald die Kolbenstange (42) vollständig ausgefahren ist, löst sich der Mitnahmeelement (11) vom Mitnehmer (7). Die Verzögerungsvorrichtung (10) kommt außer Eingriff. Die Kolbenstange (42) der Verzögerungsvorrichtung (10) ist nun ausgefahren. Die Einzugsvorrichtung ist gelöst.

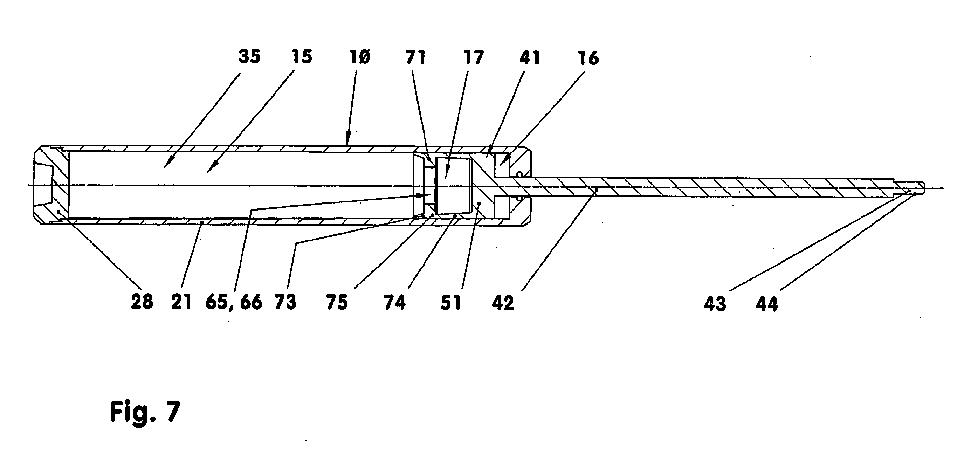

In der Figur 7 ist eine weitere Verzögerungsvorrichtung (10) dargestellt. In dieser Verzögerungsvorrichtung (10) bilden die Kolbenstange (42), der Kolben (51) und das Kolbendichtelement (71) die Kolbeneinheit (41). Diese ist beispielsweise aus zwei verschiedenen, aneinander angeformten Werkstoffen hergestellt. So besteht das Kolbendichtelement (71) z.B. aus Nitril-Butadien-Kautschuk während der Kolben (51) und die Kolbenstange (42) aus einem anderen Werkstoff, z.B. einem im Spritzgussverfahren verarbeitbaren thermoplastischen Werkstoff hergestellt ist.

In dem hier dargestellten Ausführungsbeispiel ist der Kolben (51) scheibenartig ausgebildet. An den Kolben (51) ist das Kolbendichtelement (71) mittels seiner Manschette (72) angeformt, so dass das Kolbendichtelement (71) topfartig in Richtung des Verdrängungsraumes (15) auskragt. Der erste und der zweite Verformungsbereich (73, 74) sind beispielsweise so ausgebildet, wie im Zusammenhang mit den Figuren 5 und 6 beschrieben. Der Stützring (75), er kann auch einen kegelförmigen Innenquerschnitt aufweisen, trägt durch sein hohes Widerstandsmoment gegen radiale Verformung zur Formstabilität des Kolbendichtelements (71) bei. Gegebenenfalls kann der Innendurchmesser des Stützrings (75) kleiner als dargestellt ausgebildet sein, solange der Querschnitt der Verbindungskanäle (65, 66) zwischen dem Druckraum (17) und dem Verdrängungsraum (15) größer ist als 1% des kleineren Innenquerschnitts des Zylinders (21).

Die Kolbenstange (42) ist hier ohne Mitnahmeelement (11) dargestellt. Der Kolbenstangenkopf (43) ist in diesem Ausführungsbeispiel zylindrisch ausgebildet und hat z.B. zwei umlaufende Rastnasen (44). Auch in diesem Ausführungsbeispiel kann die Kolbeneinheit (41) ein Mitnahmeelement (11) umfassen, das z.B. an die Kolbenstange (42) angeformt ist.

Der Druckraum (17) und die Verbindungskanäle (65, 66) können auch bei der in der Figur 7 dargestellten Kolbeneinheit (41) so ausgeführt sein, wie im Zusammenhang mit den Figuren 1 - 6 beschrieben. So kann der Kolben (51) einen kegel- (54) oder zylinderförmigen Abschnitt (56) und einen Anschlagflansch (64) zur Aufnahme und Führung des Kolbendichtelementes (71) aufweisen.

Die in der Figur 7 dargestellte Verzögerungsvorrichtung (10) besteht - abgesehen von der Kolbenstangendichtung (32) - beispielsweise aus drei Einzelteilen. Dies sind der Zylindermantel (22), die Kolbeneinheit (41) und der Zylinderboden (28).

Die Montage der Verzögerungsvorrichtung (10) erfolgt beispielsweise ähnlich, wie im Zusammenhang mit den Figuren 1 - 3 beschrieben. Aufgrund der geringen Anzahl der im Spritzgussverfahren herstellbaren Bauteile erfolgt die Herstellung und Montage schnell und kostengünstig.

Bei ausgefahrener Kolbenstange (42) liegt das Kolbendichtelement (71) beispielsweise nur mit dem Dichtkragen (83) lose an der Zylinderinnenwandung (23) an. Die Bremsmanschette (84) hat radiales Spiel zur Zylinderinnenwandung (23). Gegebenenfalls kann die Bremsmanschette (84) exzentrisch im Zylinder (21) liegen.

Beim Einfahren der Kolbenstange (42) wird der Gasdruck im Verdrängungsraum (15) erhöht. Gleichzeitig wird der flink auf Druckänderungen reagierende Dichtkragen (83) an die Zylinderinnenwandung (23) angepresst. Die Bremsmanschette (84) reagiert träge auf die Druckänderung und wird zunächst nur geringfügig verformt. Erst beim weiteren Einfahren der Kolbenstange (42) - der Druck im Verdrängungsraum (15) und im Druckraum (17) wird weiter erhöht - wird die Bremsmanschette (84) weiter verformt und legt sich unter axialer Kontraktion an die Zylinderinnenwandung (23) an.

Nach dem Überfahren der Drosselkanäle (24) springt zunächst der Dichtkragen (83) unter dem Einfluss des Druckausgleichs zwischen dem Verdrängungs- (15) und dem Ausgleichsraum (16) in die Ausgangslage zurück. Beispielsweise erst nach dem Abbau des Überdrucks im Verdrängungsraum (15) gegenüber dem Ausgleichsraum (16) löst sich die Bremsmanschette (84) von der Zylinderinnenwandung (23) und formt sich elastisch zurück.

Das Ausfahren der Kolbenstange (42) verläuft z.B. wie im Zusammenhang mit den Figuren 1 - 6 beschrieben.

Auch diese Verzögerungsvorrichtung (10) kann Teil eines Führungssystems sein.

### Bezugszeichenliste:

- 1: Umgebung

- 7: Mitnehmer

- 10: Verzögerungsvorrichtung
- 11: Mitnahmeelement

- 15: Verdrängungsraum
- 16: Ausgleichsraum
- 17: Druckraum

- 21: Zylinder
- 22: Zylindermantel
- 23: Zylinderinnenwandung
- 24: Längsnut, Drosselkanal
- 25: Längsnut
- 26: Bodenende
- 27: Einkerbung
- 28: Zylinderboden
- 29: Kopfteil, Zylinderkopf

- 31: Kolbenstangendurchführung
- 32: Kolbenstangendichtung

- 35: Zylinderinnenraum

- 41: Kolbeneinheit
- 42: Kolbenstange
- 43: Kolbenstangenkopf
- 44: Rastnasen

- 51: Kolben
- 52: Durchmesserbereich
- 53: Druckraumbereich, Durchmesserbereich
- 54: kegelstumpfförmiger Bereich
- 55: Kegelstumpfmantelfläche
- 56: zylindrischer Bereich
- 57: Kolbennut
- 58, 59: Begrenzungsflächen von (57)

- 61: Anlageschulter
- 62: Aufnahmeringnut
- 63: Stirnfläche
- 64: Anlageflansch
- 65, 66: Längsnuten, Kanäle

- 71: Kolbendichtelement
- 72: Manschette
- 73: erster Verformungsbereich, flink verformende Zone
- 74: zweiter Verformungsbereich, träge verformende Zone
- 75: Stützring
- 76: Filmgelenk
- 77: Längsnuten, Drosselkanäle
- 78: Erhebungen
- 79: Innenfläche von (74)

- 81: Anlagefläche

- 83: Dichtkragen
- 84: Bremsmanschette

- 86: Kegelstumpf
- 87: zylindrischer Bereich
- 88, 89: Stirnflächen von (75), Anlageflächen

## Patentansprüche

1. Pneumatische Verzögerungsvorrichtung (10) mit einem Zylinder (21) und mit einem in diesem mittels einer Kolbenstange (42) geführten, mit einem Kolbendichtelement (71) ausgestatteten, einen Verdrängungsraum (15) gegen einen Ausgleichsraum (16) abgrenzenden Kolben (51), die eine der Hubbewegung des Kolbens (51) entgegengesetzte Kraft aufbaut,
- wobei der Leckagestrom zwischen dem Verdrängungsraum (15) und dem Ausgleichsraum (16) zumindest hubrichtungsabhängig ist,
- wobei zumindest der Kolben (51) und die Kolbenstange (42) eine einteilige Kolbeneinheit (41) bilden,
- wobei das Kolbendichtelement (71) mindestens zwei Verformungszonen (73, 74) aufweist, zwischen denen ein Stützring (75) angeordnet ist, von denen eine erste Zone (73) eine flink verformende Zone (73) und eine zweite eine träge verformende Zone (74) ist, die als zylüderförmige Manschette ausgebildet ist, wobei sich unter dem Einfluss der gleichen Druckänderung die zweite Zone (74) träger als die erstgenannte Zone (73) verformt,
- wobei die sich flink verformende Zone (73) des Kolbendichtelements (71) die Zylinderinnenwandung (23) zumindest bei Lage des Kolbens (51) in der dem Verdrängungsraum (15) abgewandten Endlage im drucklosen Zustand kontaktiert und
- wobei sich bei Druckbeaufschlagung die träge verformende Zone (74) unter axialer Kontraktion in radialer Richtung nach außen zumindest beim Verfahren des Kolbens (51) aus der dem Verdrängungsraum (15) abgewandten Endlage zur Anlage an die Zylinderinnenwandung (23) verformt, **dadurch gekennzeichnet,**
- **dass** das Kolbendichtelement (71) und der Kolben (51) einen mit dem Verdrängungsraum (15) kommunizierenden Druckraum (17) begrenzen
- **dass** der Innendurchmesser des Stützrings kleiner ist als der kleinste Innendurchmesser der Manschette und
- **dass** die Wandstärke der zweiten Zone (74) in Längsrichtung des Kolbendichtelements (71) ansteigt, wobei der Bereich geringerer Wandstärke in Richtung der ersten Zone (73) orientiert ist.

2. Pneumatische Verzögerungsvorrichtung (10) nach Anspruch 1, **dadurch gekennzeichnet, dass** der Durchlassquerschnitt zwischen dem Verdrängungsraum (15) und dem Druckraum (17) mindestens 1 % des kleinsten Zylinderinnenquerschnitts beträgt

3. Pneumatische Verzögerungsvorrichtung (10) nach Anspruch 1, **dadurch gekennzeichnet, dass** das Kolbendichtelement (71) mittels des Stützrings (75) entlang einer Kegelstumpfmantelfläche (55) auf dem Kolben (51) geführt ist, wobei der Durchmesser der Kegelstumpfmantelfläche (55) mit zunehmenden Abstand vom Verdrängungsraum (15) zunimmt.

4. Pneumatische Verzögerungsvorrichtung (10) nach Anspruch 1, **dadurch gekennzeichnet, dass** die flink verformende Zone (73) in Richtung des Verdrängungsraums (15) orientiert ist.

5. Pneumatische Verzögerungsvorrichtung (10) nach Anspruch 1, **dadurch gekennzeichnet, dass** die Kolbeneinheit (41) ein Mitnahmeelement (11) umfasst.

6. Pneumatische Verzögerungsvorrichtung (10) nach Anspruch 1, **dadurch gekennzeichnet, dass** die einteilige Kolbeneinheit (41) den Kolben (51), die Kolbenstange (42) und das Kolbendichtelement (71) umfasst.

7. Pneumatische Verzögerungsvorrichtung (10) nach Anspruch 6, **dadurch gekennzeichnet, dass** der Werkstoff der Kolbeneinheit (41) mindestens zwei Komponenten umfasst.

8. Pneumatische Verzögerungsvorrichtung (10) nach Anspruch 7, **dadurch gekennzeichnet, dass** die Komponente des Kolbendichtelements (71) Nitril-Butadien-Kautschuk ist.

9. Führungssystem mit einer pneumatischen Verzögerungsvorrichtung (10) nach Anspruch 1.

## Claims

1. Pneumatic delay apparatus (10) comprising a cylinder (21) and a piston (51), said piston guided in said cylinder by means of a piston rod (42), being provided with a piston seal element (71), delimiting a displacement space (15) from a venting space (16) and acting to build a force in a direction opposite to the stroke of piston (51); with
- the leakage flow between displacement space (15) and venting space (16) being dependent at least on the direction of the piston stroke;
- at least piston (51) and piston rod (42) forming an integral piston unit (41);
- piston seal element (71) having therealong at least two deformation zones (73, 74) and a support ring (75) therebetween, with a first zone (73) being a fast deformation zone (73) and a second zone (74) being a slow deformation zone (74), with second zone (74) being formed as a cylindrical collar and deforming more slowly than first-mentioned zone (73) in response to the same pressure change;
- fast deformation zone (73) contacting internal cylinder wall (23) in the zero pressure condition at least when piston (51) is in its end position remote from displacement space (15); and
- slow deformation zone (74) undergoing deformation in a radially outward direction by axial contraction as pressure is acting on it at least when piston (51) is moved from its end position remote from displacement space (15) so that it abuts internal cylinder wall (23); **characterized in that**
- piston seal element (71) and piston (51) jointly define a pressure space (17) in fluid communication with displacement space (15);
- the inner diameter of support ring is smaller than the smallest inner diameter of said collar; and
- the wall thickness of second zone (74) increases in the longitudinal direction of piston seal element (71), with the area of lesser wall thickness oriented towards first zone (73).

2. Pneumatic delay apparatus (10) as claimed in claim 1, **characterized in that** the cross sectional area of passage between displacement space (15) and pressure space (17) has a magnitude at least 1 % of the smallest internal cross sectional area of the cylinder.

3. Pneumatic delay apparatus (10) as claimed in claim 1, **characterized in that** piston seal element (71) is guided by support ring (75) along a frustroconical lateral surface (55) on piston (51), with the diameter of said frustroconial lateral surface (55) increasing with distance from displacement space (15).

4. Pneumatic delay apparatus (10) as claimed in claim 1, **characterized in that** fast deformation zone (73) is oriented towards displacement space (15).

5. Pneumatic delay apparatus (10) as claimed in claim 1, **characterized in that** piston unit (41) comprises an entrainment element (11).

6. Pneumatic delay apparatus (10) as claimed in claim 1, **characterized in that** integral piston unit (41) is made up of piston (51), piston rod (42) and piston seal element (71).

7. Pneumatic delay apparatus (10) as claimed in claim 6, **characterized in that** the material of piston unit (41) comprises at least two components.

8. Pneumatic delay apparatus (10) as claimed in claim 7, **characterized in that** the component constituting piston seal element (71) is nitrile-butadiene caoutchouc.

9. Guide system comprising pneumatic delay apparatus (10) as claimed in claim 1.

## Revendications

1. Dispositif de ralentissement pneumatique (10) comportant un cylindre (21) et un piston (51) guidé dans ce dernier au moyen d'une tige de piston (42), pourvu d'un élément d'étanchéité de piston (71) et délimitant une chambre de refoulement (15) par rapport à une chambre de compensation (16), qui crée une force opposée au mouvement de la course du piston (51),
- l'écoulement de fuite entre la chambre de refoulement (15) et la chambre de compensation (16) dépendant au moins de la direction de la course,
- le piston (51) et la tige de piston (42) formant une unité de piston d'une seule pièce (41),
- l'élément d'étanchéité (71) présentant au moins deux zones de déformation (73, 74) entre lesquelles est placée une bague d'appui (75), avec une première zone (73) rapidement déformable et une deuxième zone (74) lentement déformable qui a la forme d'un manchon cylindrique, la deuxième zone (74) se déformant plus lentement que la première zone (73) sous l'influence de la même modification de pression,
- la zone rapidement déformable (73) de l'élément d'étanchéité (71) entrant en contact avec la paroi intérieure du cylindre (23), au moins lorsque le piston (51), sans pression, se trouve en position de fin de course opposée à la chambre de refoulement (15) et
- la zone lentement déformable (74) se déformant sous l'effort d'une pression, sous contraction axiale dans le sens radial vers l'extérieur, au moins lorsque le piston (51) se déplace de la position de fin de course opposée à la chambre de refoulement (15) pour s'appuyer contre la paroi intérieure (23) du cylindre, **caractérisé en ce**
- **que** l'élément d'étanchéité de piston (71) et le piston (51) délimitent une chambre de pression (17) communiquant avec la chambre de refoulement,
- **que** le diamètre intérieur de la bague d'appui est inférieur au plus petit diamètre intérieur du manchon et
- **que** l'épaisseur de la paroi de la deuxième zone (74) augmente dans le sens longitudinal de l'élément d'étanchéité de piston (71), la zone d'épaisseur de paroi plus réduite étant orientée vers la première zone (73).

2. Dispositif pneumatique de ralentissement (10) selon la revendication 1, **caractérisé en ce que** la section de passage entre la chambre de refoulement (15) et la chambre de pression (17) est au moins égale à 1% de la plus petite section intérieure du cylindre.

3. Dispositif pneumatique de ralentissement (10) selon la revendication 1, **caractérisé en ce que** l'élément d'étanchéité de piston (71) est guidé sur le piston (51) le long d'une surface périphérique tronconique à l'aide de la bague d'appui (75), le diamètre de la surface périphérique tronconique (55) augmentant avec l'augmentation de la distance par rapport à la chambre de refoulement (15).

4. Dispositif pneumatique de ralentissement (10) selon la revendication 1, **caractérisé en ce que** la zone rapidement déformable (73) est orientée en direction de la chambre de refoulement (15).

5. Dispositif pneumatique de ralentissement (10) selon la revendication 1, **caractérisé en ce que** l'unité de piston (41) comprend un élément d'entraînement (11).

6. Dispositif pneumatique de ralentissement (10) selon la revendication 1, **caractérisé en ce que** l'unité de piston (41) d'une seule pièce comprend le piston (51), la tige de piston (42) et l'élément d'étanchéité de piston (71).

7. Dispositif pneumatique de ralentissement (10) selon la revendication 6, **caractérisé en ce que** le matériau de l'unité de piston (41) comprend au moins deux composants.

8. Dispositif pneumatique de ralentissement (10) selon la revendication 7, **caractérisé en ce que** le composant de l'élément d'étanchéité de piston (71) est un caoutchouc au nitrile butadiène hydrogéné.

9. Système de guidage équipé d'un dispositif pneumatique de ralentissement (10) selon la revendication 1.
